# EUROPÄISCHE PATENTSCHRIFT

(11) **EP 2 440 883 B1**
(45) Veröffentlichungstag und Bekanntmachung des Hinweises auf die Patenterteilung: **05.06.2013**
(21) Anmeldenummer: 10726901.1
(22) Anmeldetag: 08.06.2010
(51) Int. Cl.: G01D 5/26, G01K 11/32, G01L 11/02

(54) **EINBINDUNG EINES LICHTWELLENLEITERS EINES MESSSENSORS IN EIN BAUTEIL**
INTEGRATION OF AN OPTICAL WAVEGUIDE OF A SENSOR INTO A COMPONENT
INTÉGRATION D'UN GUIDE D'ONDES OPTIQUES D'UN CAPTEUR DE MESURE DANS UN COMPOSANT

(30) Priorität: 08.06.2009 DE 102009024519; 15.10.2009 DE 102009049479
(43) Veröffentlichungstag der Anmeldung: 18.04.2012
(73) Patentinhaber: SMS Siemag Aktiengesellschaft, 40237 Düsseldorf (DE)
(72) Erfinder: FEHLEMANN, Gereon, 40489 Düsseldorf (DE)
(74) Vertreter: Klüppel, Walter
(86) Internationale Anmeldenummer: PCT/EP2010/003414
(87) Internationale Veröffentlichungsnummer: WO 2010/142410

(56) Entgegenhaltungen:
- WO-A2-2004/015349
- DD-A1- 240 947
- US-A- 5 996 219
- US-A1- 2004 184 700
- US-A1- 2005 061 058

## Beschreibung

Die Erfindung richtet sich auf ein Verfahren zur Einbindung eines Lichtwellenleiters eines Temperatur- und/oder Spannungsmesssensors in ein aus einem Grundwerkstoff mit darauf aufgebrachter Beschichtung bestehendes Temperatur- und/oder Spannungsmessbauteil, wobei der Lichtwellenleiter in einer vorgesehenen Messebene angeordnet und anschließend eine bedeckende Beschichtung aufgetragen wird.
Weiterhin betrifft die Erfindung ein Messbauteil mit einem eingebundenen Lichtwellenleiter eines Temperatur- und/oder Spannungsmesssensors, das aus einem Grundwerkstoff mit darauf aufgebrachter Beschichtung aufgebaut ist, wobei der Lichtwellenleiter in einer vorgesehenen Messebene angeordnet und von einer Beschichtung überdeckt ist.

Es ist bekannt, zur Temperaturmessung Lichtwellenleiter einzusetzen und in ein Temperaturmessbauteil einzubauen. Solch ein Temperaturmessbauteil kann ein zur Temperaturmessung an ein Maschinen- oder Anlagenelement anzubauendes, einen eingebetteten Sensor aufweisendes Bauteil wie eine Temperaturmesssonde, aber auch ein ein heißes Fluid aufnehmendes Gefäß oder ein Behälter, wie z.B. ein Wärmetauscher oder ein Ofen, sein. Um Betriebszustände und/oder Verschleiß zu erkennen, wird an den Bauteilen die Temperatur gemessen, gegebenenfalls an mehreren Stellen. Für die Messung der Temperatur sind Lichtwellenleiter als Sensor und Messwertaufnehmer und entsprechende Auswerteeinheiten bekannt.

Ebenso ist es bekannt, derartige Lichtwellenleiter auch zur Messung mechanischer Spannungen oder mechanischer Spannungszustände zu verwenden. Hierzu werden die Lichtwellenleiter als Bestandteil eines mechanische Spannungen detektierenden Spannungsmesssensors in ein Spannungsmessbauteil eingebaut, dessen mechanische Spannungen ermittelt werden sollen. In diesem Sinne wird nachfolgend der begriff "Spannungsmessbauteit" verwendet. Glasfaserleiter oder Lichtwellenleiter werden auch zur Messung mechanischer Spannungen verwendet. Dazu muss die jeweilige Lichtwellenleiterfaser, insbesondere Glasfaser, oder ein Bündel an Fasern fest in die jeweilige Matrix, insbesondere die sie jeweils umgebende Materialmatrix, eingebunden sein.

Zur Temperaturmessung sind die Lichtwellenleiter, z.B. in Form von Glasfasern, häufig in ein schützendes Metallrohr eingelassen, welches an der Stelle angeordnet ist, an der die Temperatur eines Bauteils oder eines Mediums gemessen werden soll. Um eine genaue Messung durchführen zu können, muss das Metallrohr möglichst eng und dicht und möglichst ohne einen Luftspalt oder Luftzwischenraum auf der Oberfläche des Bauteils oder des Werkstoffs oder des Mediums aufliegen, dessen Temperatur gemessen werden soll. Um dies zu ermöglichen, sind in der Fläche des Bauteils gefräste Nute oder Bohrungen vorhanden, in oder auf welchen das Metallrohr liegt. Aufgrund üblicher Maßabweichungen und Toleranzen ist hierbei aber nicht sichergestellt, dass das Metallrohr in jedem Fall eng und unmittelbar an der Oberfläche und damit an dem Werkstoff des Bauteils anliegt. Außerdem ist diese Art des Anbringens eines Lichtwellenleiters je nach geometrischer Ausformung des Bauteils oder der möglichen mechanischen Bearbeitung Beschränkungen unterworfen.

Aus der gattungsgemäßen US 5,996,219 A ist ein Verfahren zum Einkapseln von elektrischen oder optischen Komponenten eines Sensors in hochwarmfestes Metall bekannt. Hierbei wird auf die Beschichtung eines aus einem Grundwerkstoff und einer Beschichtung bestehenden Substrats ein Lichtwellenleiter aufgebracht und in eine weitere, mehrschichtig darauf aufgebrachte, auch Metall umfassende Beschichtung eingebettet. Durch die Einkapselung oder Einbettung soll ein Schutz vor schädlichen Umwelteinflüssen erreicht werden. Die so hergestellte Temperatur- oder Spannungsmesssonde oder ähnliche Komponente stellt aber nicht unmittelbar das Bauteil dar, dessen Temperatur oder mechanische Spannung oder Ähnliches gemessen werden soll. Sie wird vielmehr offenbar an einem solchen Bauteil erst noch befestigt. Das Einkapseln oder Einbetten erfolgt mit vielen unterschiedlichen Schichten und ist entsprechend aufwändig.

Die US 6,944,360 B2 offenbart einen Temperatur-/Druck- Sensor, der in hochwarmfestes Metall eingebettet ist. Auch hier ist die Einbettung mehrschichtig und entsprechend aufwändig.

Die Druckschrift US 2005/0061058 A1 beschreibt ein Verfahren zur Überwachung einer Wärmeschutzbeschichtung innerhalb eines Turbinenmotors, bei dem eine Faserleitung in die Wärmeschutzbeschichtung eingebettet ist.

Die Druckschrift DD 240 947 A1 beschreibt ein Anzeigesystem für die Gefahr von Wanddurchbrüchen bei Schmelzöfen, bei dem Lichtleiter auf die Außenhaut eines Tiegels aufgebracht werden.

Die Druckschriften US 2004/0184700 A1 und US 5,996,219 beschreiben ein Sensorsystem mit zumindest einem Sensor, der in einem hochtemperaturbeständigen Metall bzw. in einer hochtemperaturbeständigen Metallschicht eingebettet ist.

Aus der WO 2004/015349 A2 ist ein Schmelzofen bekannt, dessen Betriebszustand mit Hilfe von Lichtwellenleitern überwacht wird. Die Lichtwellenleiter sind zwischen einer feuerfesten Schicht, die eine Wärmequelle umgibt, und einer Außenwand des Schmelzofens angeordnet. Die Lichtwellenleiter sind z.B. auf einer flexiblen Matte befestigt. Eine exakte Zuordnung der gemessenen Temperaturen zu einer eng begrenzten Messstelle ist nicht möglich, weil die Temperaturen über Strahlung an die Lichtwellenleiter übertragen werden.

Der Erfindung liegt die Aufgabe zugrunde, eine Lösung zu schaffen, die es ermöglicht, eine exakte und enge Einbindung und Anbindung eines Lichtwellenleiters in und an den Körper eines Temperatur- und/oder Spannungsmessbauteils zu erreichen.

Bei einem Verfahren der eingangs näher bezeichneten Art wird diese Aufgabe erfindungsgemäß dadurch gelöst, dass der Lichtwellenleiter in, auf oder an einer den Grundwerkstoff des Temperaturmessbauteils begrenzenden und eine vorgesehene Messebene ausbildenden Ebene des Temperatur- und/oder Spannungsmessbauteils angeordnet wird und anschließend auf diese aus dem Grundwerkstoff gebildete Ebene des Temperatur- und/oder Spannungsmessbauteils ein Beschichtungswerkstoff unter Ausbildung der den Lichtwellenleiter oder ein den Lichtwellenleiter umgebendes Rohr stoffschlüssig an den Grundwerkstoff und/oder angrenzende Beschichtungsbereiche anbindende Beschichtung aufgetragen wird.

Bei einem Messbauteil der eingangs näher bezeichneten Art wird diese Aufgabe erfindungsgemäß dadurch gelöst, dass der Lichtwellenleiter in, auf oder an einer den Grundwerkstoff des Temperatur- und/oder Spannungsmessbauteils begrenzenden und eine vorgesehene Messebene ausbildenden Ebene des Temperatur- und/oder Spannungsmessbauteils angeordnet und in dieser aus dem Grundwerkstoff gebildeten Ebene des Temperatur- und/oder Spannungsmessbauteils mittels einer den Lichtwellenleiter oder ein den Lichtwellenleiter umgebendes Rohr stoffschlüssig an den Grundwerkstoff und/oder angrenzende Beschichtungsbereiche anbindenden Beschichtung festgelegt ist.

Die jeweiligen Unteransprüche betreffen vorteilhafte Ausgestaltungen und Weiterbildungen der Erfindung.

Durch die Erfindung wird ein Temperatur- und/oder Spannungsmessbauteil so ausgestaltet und ausgestattet, dass in und/oder an ihm herrschende Temperaturen oder Spannungen mit Hilfe des derart in den Körper des Temperatur- und/oder Spannungsmessbauteils eingebundenen oder an den Körper des Temperatur- und/oder Spannungsmessbauteils angebundenen mindestens einen Lichtwellenleiters exakt gemessen und exakt lokal zugeordnet werden können. Dank der Erfindung kann ein in Form eines Lichtwellenleiters ausgebildeter oder einen Lichtwellenleiter umfassender Temperatursensor oder Spannungssensor oder Drucksensor dicht und eng anliegend unmittelbar und direkt in den Körper eines Konstruktionsbauteils oder eines anlagentechnischen oder maschinentechnischen oder verfahrenstechnischen Werkzeugs oder Anlagen- oder Maschinenbauteils eingebaut und eingebunden werden. Der ggf. von einem schützenden Rohr umgebene Lichtwellenleiter wird durch die Beschichtung fest und homogen umschlossen oder überdeckt und so auf oder in der vorgesehenen Messebene fixiert. Es ist nicht mehr notwendig, dass vorher ein einzelner, den Lichtwellenleiter aufweisender Sensor an sich hergestellt werden muss, der dann an dem Werkzeug oder Anlagenbauteil mit der damit einhergehenden und vorstehend beschriebenen Problematik befestigt werden muss. Der Lichtwellenleiter ist in der oder die Beschichtung eingebettet und somit vollkommen von der Beschichtung überdeckt und hierdurch vor mechanischen und/oder chemischen Einflüssen geschützt.
Die erfindungsgemäße Ausbildung eines Temperatur- und/oder Spannungsmessbauteils ist insbesondere dann von Vorteil, wenn sich der Ort der mit dem Lichtwellenleiter vorzunehmenden Temperatur- oder Spannungsmessung nahe an der wärme- und temperaturinduzierten und/oder spannungsinduzierten Oberfläche des Temperatur- und/oder Spannungsmessbauteils befindet und/oder dieses eine komplexe und/oder komplizierte Form aufweist und gleichzeitig eine enge, homogene Einbindung des Lichtwellenleiters gewünscht wird.

Für die Herstellung einer vorteilhaften Einbindung und Anbindung des Lichtwellenleiters ist es gemäß Ausgestaltung der Erfindung zweckmäßig, wenn zunächst der die Messebene aufweisende und aus dem Grundwerkstoff mit aufgebrachter Beschichtung bestehende Teil des Temperatur- und/oder Spannungsmessbauteils hergestellt, anschließend die Beschichtung bis zur Messebene partiell entfernt, in diesem Bereich mindestens ein Lichtwellenleiter oder ein Lichtwellenleiter mit umgebendem Rohr angeordnet und abschließend die Beschichtung wieder aufgebaut wird.
Hierbei wird der Lichtwellenleiter in Abhängigkeit von dem gewählten Beschichtungsverfahren direkt unmittelbar ohne umgebendes Rohr oder in das umgebende Rohr eingebunden auf die geschaffene Messebene aufgelegt und fixiert und dann die Beschichtung wieder aufgebaut.

Für die exakte Platzierung des Lichtwellenleiters in dem Temperatur- und/oder Spannungsmessbauteil sieht die Erfindung weiterhin vor, dass in der Messebene in den Grundwerkstoff Nute gefräst oder Löcher gebohrt werden und der Lichtwellenleiter oder das den Lichtwellenleiter umgebende Rohr zumindest bereichsweise oder teilweise in eine jeweilige Nut oder ein jeweiliges Loch eingesetzt und die Beschichtung aufgetragen wird. Auf diese Weise ist der Lichtwellenleiter exakt fixierbar und positionierbar. Vorzugsweise werden Nute mit einem dem Durchmesser von Lichtwellenleitern in der Größenordnung von etwa 100 bis 150 µm entsprechenden Durchmesser in die Messebene eingebracht, in welchen dann der Lichtwellenleiter ohne schützendes Rohr eingelegt und dann beschichtet wird. Es ist aber auch möglich, solche Nute für in einem Rohr angeordnete Lichtwellenleiter auszubilden.

Als Beschichtungsmaterial oder Beschichtungswerkstoff kann ein zum Grundwerkstoff gleiches oder ein zum Grundwerkstoff unterschiedliches Material aufgetragen werden, was die Erfindung ebenfalls vorsieht.

Zum Auftragen der Beschichtung eignen sich bekannte Beschichtungsverfahren. Zweckmäßig ist es gemäß weiterer Ausgestaltung der Erfindung, wenn die Beschichtung mittels eines thermischen Spritzverfahrens oder eines galvanischen oder chemischen Beschichtungsverfahrens aufgetragen wird.
Zur Auftragung und zum Aufbau der Beschichtung eignen sich als thermische Spritzverfahren beispielsweise das Drahtflammspritzen, das Plasmaspritzen, das Pulverdampfspritzen, das Hochgeschwindigkeitsflammspritzen oder das Kaltgasspritzen. Da die thermischen Beschichtungsverfahren eine hohe kinetische Energie auf die zu beschichtende Oberfläche des Temperatur- und/oder Spannungsmessbauteils und den Lichtwellenleiter ausüben, sollte sich der Lichtwellenleiter in diesem Falle in dem ihn umgebenden und schützenden Rohr aus Metall befinden, damit er beim Beschichtungsvorgang nicht beschädigt wird. Im Unterschied dazu handelt es sich beim galvanischen Beschichten um ein chemisches Reaktionsverfahren, das den jeweiligen Lichtwellenleiter aus Glasfaser nicht (be)schädigt.

Eine besonders günstige Schichtdicke wird gemäß Weiterbildung der Erfindung dann erhalten, wenn eine Beschichtung in einer Stärke von 200 µm - 5 mm, insbesondere von 200 - 250 µm aufgetragen wird. Es ist auch möglich, dass eine Beschichtung in einer Stärke von größer 250 µm bis zu einigen Millimetern aufgetragen wird. In einer weiteren Alternative weist die Beschichtung eine Stärke von mindestens dem 1,5- fachen des Durchmessers des Lichtwellenleiters auf. Hierdurch ist der Lichtwellenleiter sicher und vollständig von der Beschichtung überdeckt, wobei auch ein gewisser Verschleiß der Beschichtung zulässig ist.

Um auch Anlagenbauteile der Schwerindustrie herstellen zu können sowie eine gute Temperaturleitfähigkeit zu erzielen, ist es gemäß weiterer erfindungsgemäßer Ausgestaltung von Vorteil, dass der Grundwerkstoff und der Beschichtungswerkstoff ein Metall sind oder zumindest im wesentlichen aus einem Metall bestehen.

Besonders günstig ist die Erfindung in solchen Fällen anwendbar, wenn der Lichtwellenleiter in, auf oder an einem Temperatur- und/oder Spannungsmessbauteil angeordnet wird, das Bestandteil eines ein heißes Fluid aufnehmenden und/oder umgebenden Bauteils ist.

Besonders vorteilhaft lässt sich die Erfindung an Kokillen, Kokillenplatten oder Rohrkokillen anwenden, mit welchen Stahl vergossen wird. Die Erfindung zeichnet sich daher weiterhin dadurch aus, dass der Lichtwellenleiter in, auf oder an einem Temperatur- und/oder Spannungsmessbauteil angeordnet wird, das Bestandteil einer Kokille, Kokillenplatte oder Rohrkokille ist oder eine solche ausbildet.

Hierbei kann der Lichtwellenleiter sowohl auf der Heißseite als auch auf der Kühlkanäle aufweisenden Seite, der Kühlseite, einer Kokille angeordnet sein, so dass die Erfindung in Weiterbildung sowohl vorsieht, dass der mindestens eine Lichtwellenleiter oder das mindestens eine den Lichtwellenleiter umgebende Rohr auf der Heißseite einer Kokille, Kokillenplatte oder Rohrkokille angeordnet wird, als auch, dass der mindestens eine Lichtwellenleiter oder das mindestens eine den Lichtwellenleiter umgebende Rohr auf der der Heißseite abgewandten Seite einer Kokille, Kokillenplatte oder Rohrkokille in einem Kühlkanal angeordnet wird.
Hierbei kann ein Kühlkanal eine besondere Form oder Ausgestaltung einer Nut sein.

Das Temperatur- und/oder Spannungsmessbauteil wird vorteilhafterweise nach einem der Ansprüche 1 - 11 hergestellt.

Hierbei ist es dann von Vorteil, wenn der Lichtwellenleiter oder das den Lichtwellenleiter umgebende Rohr in der Beschichtung eingebettet ist, wobei weiterhin der Lichtwellenleiter oder das den Lichtwellenleiter umgebende Rohr in einer im Grundwerkstoff ausgebildeten Nut eingelassen ist, was die Erfindung ebenfalls vorsieht.

Eine zweckmäßige Stärke der Beschichtung beträgt erfindungsgemäß 200 - 250 µm. Hierbei ist eine Beschichtung in einer Stärke von mindestens dem 1,5-fachen des Durchmessers eines Lichtwellenleiters vorteilhaft, da hierdurch der Lichtwellenleiter sicher und vollständig von der Beschichtung überdeckt sowie ein gewisser Verschleiß der Beschichtung zulässig ist.

Das Temperatur- und/oder Spannungsmessbauteil kann gemäß Weiterbildung der Erfindung ein vorzugsweise integraler Bestandteil eines ein heißes Fluid aufnehmenden und/oder umgebenden Bauteils sein, wobei erfindungsgemäß dann weiterhin vorgesehen sein kann, dass das Temperatur- und/oder Spannungsmessbauteil Bestandteil einer Kokille, Kokillenplatte oder Rohrkokille ist oder eine solche ausbildet.

Schließlich sieht die Erfindung auch noch vor, dass der mindestens eine Lichtwellenleiter oder das mindestens eine den Lichtwellenleiter umgebende Rohr auf der Heißseite einer Kokille, Kokillenplatte oder Rohrkokille angeordnet ist und/oder der mindestens eine Lichtwellenleiter oder das mindestens eine den Lichtwellenleiter umgebende Rohr auf der Heißseite abgewandten Seite einer Kokille, Kokillenplatte oder Rohrkokille in einem Kühlkanal angeordnet ist. Es ist also möglich mehr als einen Lichtwellenleiter an einem Temperatur- und/oder Spannungsmessbauteil anzuordnen und beispielsweise sowohl die Heißseite als auch die Kühlkanäle aufweisende Seite einer Kokille mit mindestens einem Lichtwellenleiter zu versehen.

Die Erfindung ist nachstehend an Hand einer Zeichnung beispielhaft näher erläutert. Diese zeigt in
- Figur 1: in schematischer Darstellung auszugsweise einen Querschnitt eines Teil eines erfindungsgemäßen Temperaturmessbauteils mit drei Lichtwellenleitern,
- Figur 2: in schematischer Darstellung auszugsweise einen Querschnitt eines Teils eines erfindungsgemäßen Temperaturmessbauteils mit drei Lichtwellenleitern, wobei die Lichtwellenleiter in Nuten angeordnet sind, und in
- Figur 3: in schematischer Darstellung einen Querschnitt einer einteiligen oder mehrteiligen Rohrkokille.

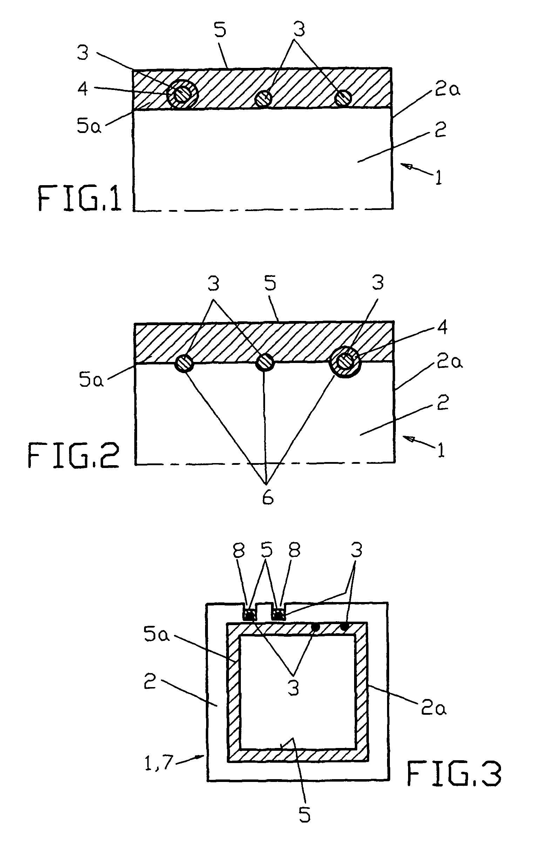

Aus der Figur 1 ist als erstes Ausführungsbeispiel ein Teil eines Körpers eines Temperaturmessbauteils 1 ersichtlich, das einen aus einem Grundwerkstoff 2 bestehenden Grundkörper 2a umfasst. Auf einer vorbestimmten und festgelegten sowie den Bereich des Grundwerkstoffs 2 begrenzenden oder abschließenden Oberfläche des Grundkörpers 2a, die eine Messebene darstellt, sind drei Lichtwellenleiter 3 angeordnet, wovon einer von einem Schutzrohr oder Rohr 4 umschlossen ist. Hierbei ist zu beachten, dass das Temperaturmessbauteil 1 in der Regel ausschließlich gleichartige Lichtwellenleiter 3 umfasst, das heißt, entweder solche mit oder solche ohne umgebendes Rohr 4. Die Lichtwellenleiter 3 liegen dicht auf dem Grundwerkstoff 2 des Grundkörper 2a auf und sind mittels einer aus einem Beschichtungswerkstoff 5a, vorzugsweise einem Metall, gebildeten Beschichtung 5 in ihrer Position fixiert und eng, dicht und homogen von der Beschichtung 5 umschlossen. Die Dicke oder Stärke der Beschichtung 5 entspricht in etwa 200 - 250 µm und damit ca. dem doppelten Durchmesser üblicher Lichtwellenleiter 3 von ca. 100 bis 150 µm, wobei das gegebenenfalls vorhandene Schutzrohr 4 hierbei unberücksichtigt bleibt. Die Schichtstärke oder -dicke kann aber auch wesentlich dicker bis hin zu mehreren Millimetern sein.

Der Grundkörper 2a ist hier aus einem geeigneten Metall in Abhängigkeit von der Verwendung gefertigt. Die Beschichtung 5 besteht aus einem Metall oder auch hochwarmfesten Metall, z.B. Nickel, und ist mittels thermischen Spritzens oder galvanisch oder chemisch aufgetragen. Bei den thermischen Spritzverfahren ist der Lichtwellenleiter 3 vorteilhaft von dem Schutzrohr 4 umgeben. Je nach Verwendung des Temperaturmessbauteils 1 weist die Beschichtung 5 eine hohe Härte und/oder Verschleißfestigkeit auf. Die Dicke oder Stärke der Beschichtung beträgt im Allgemeinen 200 bis 250 µm, kann aber auch deutlich größer ausgeführt sein.

Der Lichtwellenleiter 3 ist eine Glasfaser mit einem Durchmesser von ca. 100 bis 150 µm. Das Schutzrohr 4 ist aus einem geeigneten Metall gefertigt.

Zur Herstellung des Bauteils 1 wird zunächst der Grundkörper 2a gefertigt. Auf der vorbestimmten Oberfläche des Grundkörpers 2a werden die Lichtwellenleiter 3 mit oder ohne Schutzrohr 4 provisorisch so befestigt, dass eine Temperaturmessung an vorgegebenen Stellen erfolgen kann. Anschließend wird die vorbestimmte Oberfläche mit der Beschichtung 5 versehen, indem diese mittels z.B. Drahtflamm-, Plasma- oder Pulverdampfspritzen aufgespritzt oder galvanisch oder chemisch aufgetragen wird.

Das zweite Ausführungsbeispiel nach der Figur 2 unterscheidet sich von dem vorigen durch in die Oberfläche des Grundkörpers 2a eingelassene Nute 6, so dass für ansonsten gleiche oder identische Teile oder Elemente dieselben Bezugszeichen verwendet werden wie beim Ausführungsbeispiel nach der Figur 1. Die Nuten 6 haben hier einen halbkreisförmigen Querschnitt, wobei ein Durchmesser des Halbkreises mindestens dem Durchmesser eines darin einzulegenden Lichtwellenleiters 3 beziehungsweise eines Schutzrohrs 4 entspricht, so dass der Lichtwellenleiter 3 oder das jeweilige Rohr 4 ohne oder allenfalls mit geringem Spiel in der zugehörigen Nut 6 geführt in der jeweils vorgesehenen Messebene anzuordnen ist.

Ein drittes, in der Figur 3 dargestelltes Ausführungsbeispiel, bei welchem gleich oder identische Teile oder Elemente ebenfalls wieder mit zu den Figuren 1 und 2 identischen Bezugszeichen versehen sind, betrifft eine einteilige oder mehrteilige Rohrkokille 7 mit rechteckigem Querschnitt. Der aus dem Grundwerkstoff 2 bestehende Grundkörper 2a der Rohrkokille 7 ist vorzugsweise aus Kupfer gefertigt und weist an seiner Außenseite, der sogenannten Kühlseite, verteilt Kühlkanäle 8 auf. Von den Kühlkanälen 8, die einen rechteckigen, gewünschtenfalls aber auch einen halbkreisförmigen, Querschnitt aufweisen, sind hier nur zwei exemplarisch dargestellt. In mindestens einem, hier in jedem, Kühlkanal 8 ist auf seiner Basis, das heißt der Innenseite, der sogenannten Heißseite, der Rohrkokille 7 benachbarten Seite des Kühlkanals 8, jeweils mindestens ein Lichtwellenleiter 3 angeordnet. Diese sind wie zu dem ersten Ausführungsbeispiel beschrieben mittels einer Beschichtung 5 befestigt und umschlossen. Alternativ und/oder zusätzlich sind an den innenseitigen inneren Wandungen des Grundkörpers 2a auf der Heißseite der Rohrkokille 7 ebenfalls von einer Beschichtung 5 überdeckte Lichtwellenleiter 3 angeordnet. Die Beschichtung 5 bedeckt hier insgesamt die inneren Wandungen und kann die bei Rohrkokillen übliche Dicke oder Stärke aufweisen. Bei der Kokille handelt es sich vorzugsweise um eine solche einer Stranggießanlage. Da Kokillenplatten oder Kokillenrohre oder Rohrkokillen 7 von Stranggießanlagen auf ihrer Heißseite häufig galvanisch mit Nickel beschichtet werden, besteht die Beschichtung 5 auf der Heißseite der Rohrkokille 7 im Ausführungsbeispiel auch aus Nickel und wird der Beschichtungswerkstoff 5a Nickel galvanisch auf den Grundwerkstoff 2, beispielsweise Stahl, aufgetragen.

Im Übrigen gelten die Ausführungen zu den anderen Ausführungsbeispielen.

Für alle Ausführungsbeispiele sind die Lichtwellenleiter 3 an eine entsprechende Auswerteeinheit angeschlossen.

Auch wenn vorstehend ein Temperaturmessbauteil 1 mit einem erfindungsgemäß eingebetteten Lichtwellenleiter 3 beschrieben ist, so kann in analoger und vorzugsweise identischer Weise anstelle des Temperaturmessbauteils 1 auch ein nicht näher dargestelltes Spannungsmessbauteil mit einem Lichtwellenleiter zur Messung von mechanischen Spannungen versehen und somit als Spannungsmesssensor ausgebildet oder Bestandteil eines solchen sein

## Patentansprüche

1. Verfahren zur Einbindung eines Lichtwellenleiters (3) eines Temperatur- und/oder spannungsmessensors in ein aus einem Grundwerkstoff (2) mit darauf aufgebrachter Beschichtung (5) bestehendes Temperatur- und/oder Spannungsmessbauteil (1), wobei der Lichtwellenleiter (3) in einer vorgesehenen Messebene angeordnet und anschließend eine bedeckende Beschichtung (5) aufgetragen wird, wobei der Lichtwellenleiter (3) in, auf oder an einer den Grundwerkstoff (2) des Temperatur und/oder Spannungsmessbauteils (1) begrenzenden und eine vorgesehene Messebene ausbildenden Ebene des Temperatur und/oder Spannungsmessbauteils (1) angeordnet und anschließend auf diese aus dem Grundwerkstoff (2) gebildete Ebene des Temperatur- und/oder Spannungsmessbauteils (1) ein Beschichtungswerkstoff (5a) unter Ausbildung der den Lichtwellenleiter (3) oder ein den Lichtwellenleiter (3) umgebendes Rohr (4) stoffschlüssig an den Grundwerkstoff (2) und/oder angrenzende Beschichtungsbereiche anbindende Beschichtung (5) aufgetragen wird, **dadurch gekennzeichnet, dass** der Lichtwellenleiter (3) In, auf oder an einem Temperatur und/oder Spannungsmessbauteil (1) angeordnet wird, das Bestandteil einer Kokille, Kokillenplatte oder Rohrkokille (7) ist oder eine solche ausbildet, dass der Grundwerkstoff (2) und der Beschichtungswerkstoff (5a) ein Metall sind oder zumindest im wesentlichen aus einem Metall bestehen und die Beschichtung (5) mittels eines thermischen Spritzverfahrens oder eines galvanischen oder chemischen Beschichtungsverfahrens aufgetragen wird.

2. Verfahren nach Anspruch 1, **dadurch gekennzeichnet, dass** zunächet der die Messebene aufweisende und aus dem Grundwerkstoff (2) mit aufgebrachter Beschichtung (5) bestehende Teil des Temperatur- und/oder Spannungemessbauteils (1) hergestellt, anschließend die Beschichtung (5) bis zur Messebene partiell entfernt, in diesem Bereich mindestens ein Lichtwellenleiter (3) oder ein Lichtwellenleiter (3) mit umgebendem Rohr (4) angeordnet und abschließend die Beschichtung (5) wieder aufgebaut wird.

3. Verfahren nach Anspruch 1 oder 2, **dadurch gekennzeichnet, dass** in der Messebene in den Grundwerkstoff (2) Nute (6) gefräst oder Löcher gebohrt werden und der Lichtwellenleiter (3) oder das den Lichtwellenleiter (3) umgebende Rohr (4) zumindest bereichsweise oder teilweise In eine Jewellige Nut (6) oder ein jeweiliges Loch eingesetzt und die Beschichtung (5) aufgetragen wird.

4. Verfahren nach einem der vorhergehenden Ansprüche, **dadurch gekennzeichnet, dass** als Beschichtungswerkstoff (5a) ein zum Grundwerkstoff (2) gleiches oder ein zum Grundwerkstoff (2) unterschiedliches Material aufgetragen wird.

5. Verfahren nach einem der vorhergehenden Ansprüche, **dadurch gekennzeichnet, dass** eine Beschichtung (5) in einer Stärke von 200 µm - 5 mm, insbesondere von 200 - 250 µm, aufgetragen wird.

6. Verfahren nach einem der Ansprüche 1 - 4, **dadurch gekennzeichnet, dass** eine Beschichtung (5) in einer Stärke von grösser 250 µm bis zu einigen Millimetern aufgetragen wird.

7. Verfahren nach einem der vorhergehenden Ansprüche, **dadurch gekennzeichnet, dass** der Lichtwellenleiter (3) in, auf oder an einem Temperatur- und/oder Spannungsmessbauteil (1) angeordnet wird, das Bestandteil eines ein heißes Fluid aufnehmenden und/oder umgebenden Bauteils ist.

8. Verfahren nach einem der vorhergehenden Ansprüche, **dadurch gekennzeichnet, dass** der mindestens eine Lichtwellenleiter (3) oder das mindestens eine den Lichtwellenleiter (3) umgebende Rohr (4) auf der Heißseite der Kokille, Kokillenplatte oder Rohrkokille (7) angeordnet wird.

9. Verfahren nach einem der vorhergehenden Ansprüche, **dadurch gekennzeichnet, dass** der mindestens eine Lichtwellenleiter (3) oder dass mindestens eine den Lichtwellenleiter (3) umgebende Rohr (4) auf der der Heißseite abgewandten Seite der Kokille, Kokillenplatte oder Rohrkokille (7) in einem Kühlkanal (8) angeordnet wird.

10. Messbauteil mit einem eingebundenen Lichtwellenleiter (3) eines Temperatur- und/oder Spannungsmesssensors, das aus einem Grundwerkstoff (2) mit darauf aufgebrachter Beschichtung (5) aufgebaut ist, wobei der Lichtwellenleiter (3) in einer vorgesehenen Messebene angeordnet und von einer Beschichtung (5) überdeckt ist, wobei der Lichtwellenleiter (3) in, auf oder an einer den Grundwerkstoff (2) des Temperatur- und/oder Spannungsmeesbauteils (1) begrenzenden und eine vorgesehene Messebene ausbildenden Ebene des Temperatur- und/oder Spannungsmessbauteils (1) angeordnet und in dieser aus dem Grundwerkstoff (2) gebildeten Ebene des Temperatur- und/oder Spannungsmessbauteils (1) mittels einer den Lichtwellenleiter (3) oder ein den Lichtwellenleiter (3) umgebendes Rohr (4) stoffschlüssig an den Grundwerkstoff (2) und/oder angrenzende Beschichtungsbereiche anbindenden Beschichtung (6) festgelegt ist, **dadurch gekennzeichnet, dass** das Temperatur- und/oder Spannungsmessbauteil (1) Bestandteil einer Kokille, Kokillenplatte oder Rohrkokille (7) ist oder eine solche ausbildet und der Grundwerkstoff (2) und der Beschichtungswerkstoff (5a) ein Metall sind oder zumindest im wesentlichen aus einem Metall bestehen.

11. Messbauteil nach Anspruch 10, **dadurch gekennzeichnet, dass** es nach einem der Ansprüche 1 - 9 hergestellt ist.

12. Messbauteil nach Anspruch 10 oder 11, **dadurch gekennzeichnet, dass** der Lichtwellenleiter (3) oder das den Lichtwellenleiter (3) umgebende Rohr (4) in der Beschichtung (5) eingebettet ist.

13. Messbauteil nach einem der Ansprüche 10 - 12, **dadurch gekennzeichnet, dass** der Lichtwellenleiter (3) oder das den Lichtwellenleiter (3) umgebende Rohr (4) in einer im Grundwerkstoff (2) ausgebildeten Nut (6) eingelassen ist.

14. Meesbauteil nach einem der Ansprüche 10 - 13, **dadurch gekennzeichnet, dass** die Beschichtung (5) eine Stärke von 200 µm - 5 mm, insbesondere von 200 - 250 µm, aufweist.

15. Verfahren nach einem der Ansprüche 10 - 13, **dadurch gekennzeichnet, dass** die Beschichtung (5) eine Stärke von grösser 250 µm bis zu einigen Millimetern aufweist.

16. Messbauteil nach einem der Ansprüche 10 - 15, **dadurch gekennzeichnet, dass** der mindestens eine Lichtwellenleiter (3) oder das mindestens eine den Lichtwellenleiter (3) umgebende Rohr (4) auf der Heißeeite der Kokille, Kokillenplatte oder Rohrkokille (7) angeordnet ist.

17. Messbauteil nach einem der Ansprüche 10 - 15, **dadurch gekennzeichnet, dass** der mindestens eine Lichtwellenleiter (3) oder das mindestens eine den Lichtwellenleiter (3) umgebende Rohr (4) auf der der Helßseite abgewandten Seite der Kokille, Kokillenplatte oder Rohrkokille (7) in einem Kühlkanal (8) angeordnet ist.

## Claims

1. Method for integrating an optical waveguide (3) of a temperature and/or voltage measuring sensor in a temperature and/or voltage measuring component (1) consisting of a base material (2) with a coating (5) applied thereon, wherein the optical waveguide (3) is arranged in an intended measurement plane and subsequently a covering coating (5) is applied, wherein the optical waveguide (3) is arranged in, on or at a plane, which bounds the base material (2) of the temperature and/or voltage measuring component (1) and forms an intended measurement plane, of the temperature and/or voltage measuring component (1) and subsequently there is applied to this plane, which is formed from the base material (2), of the temperature and/or voltage measuring component (1) a coating material (5a) with formation of the coating (5) bonding the optical waveguide (3) or a tube (4) surrounding the optical waveguide (3) by material couple to the base material (2) and/or adjoining coating regions, **characterised in that** the optical waveguide (3) is arranged in, on or at a temperature and/or voltage measuring component (1) which is a part of a mould, mould plate or tube mould (7) or forms such, that the base material (2) and the coating material (5a) are a metal or consist at least substantially of a metal and the coating (5) is applied by means of a thermal spray method or an electroplating or chemical coating method.

2. Method according to claim 1, **characterised in that** initially the part, which has the measuring plane and consists of the base material (2) with applied coating (5), of the temperature and/or voltage measuring component (1) is produced, subsequently the coating (5) is partially removed as far as the measurement plane, at least one optical waveguide (3) or an optical waveguide (3) with a surrounding tube (4) is arranged in this region and subsequently the coating (5) is built up again.

3. Method according to claim 1 or 2, **characterised in that** grooves (8) are milled or holes are drilled into the base material (2) in the measurement plane and the optical waveguide (3) or the tube (4) surrounding the optical waveguide (3) is inserted at least in a region or partly into a respective groove (6) or a respective hole and the coating (5) is applied.

4. Method according to any one of the preceding claims, **characterised in that** a material which is the same as the base material (2) or different from the base material (2) is applied as coating material (5a).

5. Method according to any one of the preceding claims, **characterised in that** a coating (5) is applied in a thickness of 200 microns to 5 millimetres, particularly 200 to 250 microns.

6. Method according to any one of claims 1 to 4, **characterised in that** a coating (5) is applied in a thickness of more than 250 microns to a few millimetres.

7. Method according to any one of the preceding claims, **characterised in that** the optical waveguide (3) is arranged in, on or at a temperature and/or voltage measuring component (1), which is an element of a component receiving and/or surrounding a hot fluid.

8. Method according to any one of the preceding claims, **characterised in that** the at least one optical waveguide (3) or the at least one tube (4) surrounding the optical waveguide (3) is arranged on the hot side of the mould, mould plate or tube mould (7).

9. Method according to any one of the preceding claims, **characterised in that** the at least one optical waveguide (3) or the at least one tube (4) surrounding the optical waveguide (3) is arranged on the side of the mould, mould plate or tube mould (7) remote from the hot side.

10. Measuring component with an integrated optical waveguide (3) of a temperature and/or voltage measuring sensor, which is constructed from a base material (2) with a coating (5) applied thereon, wherein the optical waveguide (3) is arranged in an intended measurement plane and covered by a coating (5), wherein the optical waveguide (3) is arranged in, on or at a plane, which bounds the base material (2) of the temperature and/or voltage measuring component (1) and which forms an intended measurement plane, of the temperature and/or voltage measuring component (1) and is fixed in this plane, which is formed from the base material (2), of the temperature and/or voltage measuring component (1) by means of a coating (6) bonding the optical waveguide (3) or a tube (4) surrounding the optical waveguide (3) by material couple to the base material (2) and/or adjoining coating regions, **characterised in that** the temperature and/or voltage measuring component (1) is a part of a mould, mould plate or tube mould (7) or forms such and the base material (2) and the coating material (5) consist of a metal or at least substantially of metal.

11. Measuring component according to claim 10, **characterised in that** it is produced according to any one of claims 1 to 9.

12. Measuring component according to claim 10 or 11, **characterised in that** the optical waveguide (3) or the tube (4) surrounding the optical waveguide (3) is embedded in the coating (5).

13. Measuring component according to any one of claims 10 to 12, **characterised in that** the optical waveguide (3) or the tube (4) surrounding the optical waveguide (3) is let into a groove (6) formed in the base material (2).

14. Measuring component according to any one of claims 10 to 13, **characterised in that** the coating (5) has a thickness of 200 microns to 5 millimetres, particularly from 200 to 250 microns.

15. Method according to any one of claims 10 to 13, **characterised in that** the coating (5) has a thickness of more than 250 microns to a few millimetres.

16. Measuring component according to any one of claims 10 to 15, **characterised in that** the at least one optical waveguide (3) or the at least one tube (4) surrounding the optical waveguide (3) is arranged on the hot side of the mould, mould plate or tube mould (7).

17. Measuring component according to any one of claims 10 to 15, **characterised in that** the at least one optical waveguide (3) or the at least one tube (4) surrounding the optical waveguide (3) is arranged in a cooling channel (8) on the side of the mould, mould plate or tube mould (7) remote from the hot side.

## Revendications

1. Procédé pour intégrer une fibre optique (3) d'un capteur de mesure de la température et/ou de la tension dans un composant de mesure de la température et/ou de la tension (1) constitué d'un matériau de base (2) sur lequel est appliquée une enduction (5), dans lequel on dispose la fibre optique (3) dans un plan de mesure prévu et on applique ensuite une enduction de revêtement (5), la fibre optique (3) étant disposée dans, sur ou contre un plan du composant de mesure de la température et/ou de la tension (1) délimitant le matériau de base (2) du composant de mesure de la température et/ou de la tension (1) et constituant un plan de mesure prévu et un matériau d'enduction (5a) étant ensuite appliqué sur ce plan du composant de mesure de la température et/ou de la tension (1), formé par le matériau de base (2), pour obtenir une enduction (5) qui intègre la fibre optique (3) ou un tube (4) qui entoure la fibre optique (3) par complémentarité de matière au matériau de base (2) et/ou à des zones d'enduction limitrophes, **caractérisé en ce que** la fibre optique (3) est disposée dans, sur ou contre un composant de mesure de la température et/ou de la tension (1) qui représente le constituant d'une coquille, d'une plaque de coquille ou d'une coquille tubulaire (7) ou qui forme un tel constituant, **en ce que** le matériau de base (2) et le matériau d'enduction (5) sont un métal ou sont constitués au moins de manière essentielle d'un métal et **en ce que** l'enduction (5) est appliquée au moyen d'un procédé de pulvérisation thermique ou d'un procédé de pulvérisation galvanique ou chimique.

2. Procédé selon la revendication 1, **caractérisé en ce qu'**on fabrique d'abord la partie du composant de mesure de la température et/ou de la tension (1) présentant le plan de mesure et constituée du matériau de base (2) sur lequel est appliquée l'enduction (5), ensuite on retire partiellement l'enduction (5) jusqu'au plan de mesure, on dispose dans cette zone au moins une fibre optique (3) ou une fibre optique 3 entourée d'un tube (4) et on rétablit ensuite l'enduction (5).

3. Procédé selon la revendication 1 ou 2, **caractérisé en ce que**, dans le plan de mesure, on pratique des rainures (6) par fraisage ou des trous par forage dans le matériau de base (2) et on insère la fibre optique (3) ou le tube (4) qui entoure la fibre optique (3) au moins dans certaines zones ou en partie dans une rainure respective (6) ou dans un trou respectif, et on applique l'enduction (5).

4. Procédé selon l'une quelconque des revendications précédentes, **caractérisé en ce qu'**on applique, à titre de matériau d'enduction (5a) une matière identique à ou différente du matériau de base (2).

5. Procédé selon l'une quelconque des revendications précédentes, **caractérisé en ce qu'**on applique une enduction (5) à une profondeur de 200 µm à 5 mm, en particulier de 200 à 250 µm.

6. Procédé selon l'une quelconque des revendications 1 à 4, **caractérisé en ce qu'**on applique une enduction (5) à une profondeur allant d'une valeur supérieure à 250 µm jusqu'à quelques millimètres.

7. Procédé selon l'une quelconque des revendications précédentes, **caractérisé en ce qu'**on dispose la fibre optique (3) dans, sur ou contre un composant de mesure de la température et/ou de la tension (1) qui représente un constituant d'un composant qui absorbe et/ou qui entoure un fluide chaud.

8. Procédé selon l'une quelconque des revendications précédentes, **caractérisé en ce qu'**on dispose ladite au moins une fibre optique (3) ou ledit au moins un tube (4) entourant la fibre optique (3) sur le côté chaud de la coquille, de la plaque de coquille ou de la coquille tubulaire (7).

9. Procédé selon l'une quelconque des revendications précédentes, **caractérisé en ce qu'**on dispose ladite au moins une fibre optique (3) ou ledit au moins un tube (4) entourant la fibre optique (3) dans un canal de refroidissement (8) sur le côté de la coquille, de la plaque de coquille ou de la coquille tubulaire (7) qui se détourne du côté chaud.

10. Composant de mesure dans lequel est intégrée une fibre optique (3) d'un capteur de mesure de la température et/ou de la tension, qui est constitué d'un matériau de base (2) sur lequel est appliquée une enduction (5), la fibre optique (3) étant disposée dans un plan de mesure prévu et étant recouverte d'une enduction (5), la fibre optique (3) étant disposée dans un plan de mesure prévu et on applique ensuite une enduction de revêtement (5), la fibre optique (3) étant disposée dans, sur ou contre un plan du composant de mesure de la température et/ou de la tension (1) délimitant le matériau de base (2) du composant de mesure de la température et/ou de la tension (1) et constituant un plan de mesure prévu, et étant fixée dans ce plan du composant de mesure de la température et/ou de la tension (1), formé par le matériau de base (2), au moyen d'une enduction (5) qui intègre la fibre optique (3) ou un tube (4) qui entoure la fibre optique (3) par complémentarité de matière au matériau de base (2) et/ou à des zones d'enduction limitrophes, **caractérisé en ce que** le composant de mesure de la température et/ou de la tension (1) représente le constituant d'une coquille, d'une plaque de coquille ou d'une coquille tubulaire (7) ou forme un tel constituant et le matériau de base (2) et le matériau d'enduction (5) sont un métal ou sont constitués au moins de manière essentielle d'un métal.

11. Composant de mesure selon la revendication 10, **caractérisé en ce qu'**il est fabriqué conformément à l'une quelconque des revendications 1 à 9.

12. Composant de mesure selon la revendication 10 ou 11, **caractérisé en ce que** la fibre optique (3) ou le tube (4) entourant la fibre optique (3) est incorporé dans l'enduction (5).

13. Composant de mesure selon l'une quelconque des revendications 10 à 12, **caractérisé en ce que** la fibre optique (3) ou le tube (4) entourant la fibre optique (3) est enchâssée dans une rainure (6) réalisée dans le matériau de base (2).

14. Composant de mesure selon l'une quelconque des revendications 10 à 13, **caractérisé en ce que** l'enduction (5) présente une épaisseur de 200 µm à 5 mm, en particulier de 200 à 250 µm.

15. Composant de mesure selon l'une quelconque des revendications 10 à 13, **caractérisé en ce que** l'enduction (5) présente une épaisseur allant d'une valeur supérieure à 250 µm jusqu'à quelques millimètres.

16. Composant de mesure selon l'une quelconque des revendications 10 à 15, **caractérisé en ce que** ladite au moins une fibre optique (3) ou ledit au moins un tube (4) entourant la fibre optique (3) est disposé sur le côté chaud de la coquille, de la plaque de coquille ou de la coquille tubulaire (7).

17. Composant de mesure selon l'une quelconque des revendications 10 à 15, **caractérisé en ce que** ladite au moins une fibre optique (3) ou ledit au moins un tube (4) entourant la fibre optique (3) est disposé dans un canal de refroidissement (8) sur le côté de la coquille, de la plaque de coquille ou de la coquille tubulaire (7) qui se détourne du côté chaud.
